**Europäisches Patentamt**

**European Patent Office**

**Office européen des brevets**

(19)

(11) Veröffentlichungsnummer: **0 069 043**
A1

(12) # EUROPÄISCHE PATENTANMELDUNG

(21) Anmeldenummer: **82710036.3**

(22) Anmeldetag: **23.06.82**

(51) Int. Cl.³: **B 65 D 19/12**, B 62 D 33/02

(30) Priorität: **23.06.81 DE 3124607**

(43) Veröffentlichungstag der Anmeldung: **05.01.83**
**Patentblatt 83/1**

(84) Benannte Vertragsstaaten: **DE FR GB IT SE**

(71) Anmelder: **Firma Planmarine, Fronplatz 28, CH-8201 Schaffhausen (DE)**

(72) Erfinder: **Hackenschmidt, Harald, Ing., Herman-Rorschachstrasse 5, CH-8200 Schaffhausen (CH)**

(74) Vertreter: **Hiebsch, Gerhard F., Dipl.-Ing., Erzbergerstrasse 5A Postfach 464, D-7700 Singen 1 (DE)**

(54) **Fahrzeug, insbesondere Rolltrailer für Schiffsladeräume.**

(57) Bei einem Rolltrailer insbesondere für Schiffsladeräume mit einer Ladefläche (4) auf Rollen oder Rädern (2) und im Randbereich der Ladefläche vorgesehenen Halteorganen zum Festlegen von Halteeinrichtungen für Ladegüter, beispielsweise Rungentaschen (14) zum Einstecken von Rungen, ragen von der Ladefläche wenigstens zwei rahmenartige Gerüste oder Gitterwände (20, 21) auf, die an der Ladefläche (4) lösbar festgelegt sind. Die Gerüste (20, 21) bilden eine Auflage für eine weitere lösbare Ladefläche und stellen ein Tragsystem dar, das die Beladung des Rollwagens oder Rolltrailers in einer zweiten – und sogar in einer weiteren – Ebene ermöglicht.

Die Gerüste besitzen firstwärts einander paarweise zugeordnete Auflagestellen (51, 52) für die weitere Ladefläche, wobei jeweils zwei der Auflagestellenpaare ein Auflageraster bestimmen. Die Auflagestellen sind als vom Gerüst aufragende Rasten ausgebildet, an die Gegenrasten eines Ladeaufsatzes anschliessbar sind, der also dann vierpunktgelagert jeweilen zwei der Gerüste oder Gitterwände der Ladefläche überspannt.

EP 0 069 043 A1

ACTORUM AG

Planmarine
==========

Fronwagplatz 28
================

CH-8201 Schaffhausen
====================

D-7700 Singen 1
Erzbergerstraße 5a
Telegr./Cables:
Bodenseepatent
Telex 793850
Telefon (07731) 63075
63076

Mein Zeichen  P-109/EPA
My file

I/ke
Datum / Date

Fahrzeug, insbesondere Rolltrailer, für Schiffsladeräume

Die Erfindung betrifft ein Fahrzeug, insbesondere einen
Rolltrailer für Schiffsladeräume mit einer Ladefläche
auf Rollen oder Rädern und im Randbereich der Ladefläche
vorgesehenen Halteorganen zum Festlegen von Halteeinrichtungen für Ladegüter, beispielsweise Rungentaschen
zum Einstecken von Rungen.

Derartige Rolltrailer sind rollbare Transportflächen auf
nahe ihrem Heck vorgesehenen Radachsen, die mit ihrer
Front- oder Stirnseite mittels Kupplungsorganen an eine Zugmaschine gehängt werden und außer Betrieb auf
der Kupplung nahen Standbeinen ruhen. Sie sind an ihren Rändern mit Halteorganen wie Zurrhaken, Cargolaschen
oder mit Ausnehmungen versehen, in welche zur Begrenzung
der Ladefläche und zum Halten der Ladegüter vertikal
aufragende Rungen eingesetzt werden können. Die Ladefläche wird mit zu transportierendem Ladegut beauf-

-2-

schlagt und anschließend der beladene Rolltrailer in
den Stauraum eines Schiffs gefahren, wo er für die
Überfahrt festgelegt wird. Es hat sich nun gezeigt,
daß die Stauräume durch derartige beladene Rolltrailer nicht in ausreichendem Maße genutzt werden
können, da einerseits die Portale zu den Schiffsräumen
eine hohe Beladung nicht zu lassen und andererseits
die Schiffsräume selbst von unverhältnismäßiger Höhe
sind.

Angesichts dieser Gegebenheiten hat sich der Erfinder
das Ziel gesetzt, ein Fahrzeug der eingangs erwähnten
Art derart zu gestalten, daß eine bessere Nutzung der
Ladefläche möglich ist, und zwar vor allem, wenn der
Rolltrailer im Schiffsladeraum verankert wurde.

Zur Lösung dieser Aufgabe führt, daß von der Ladefläche wenigstens zwei diese begrenzende rahmenartige Gerüste aufragen, die an den Halteorganen der Ladefläche lösbar festgelegt sind und in Abstand zu dieser
eine Auflage mit Halteorganen für eine weitere Ladefläche bilden, die lösbar auf den Gerüsten oder Gitterwänden ruht. Diese erfindungsgemäßen Gerüste behindern
die Beladung der eigentlichen Ladefläche nicht und
stellen ein Tragsystem dar, das die Beladung des Rolltrailers in einer zweiten -- gegebenenfalls auch in
einer weiteren -- Ebene ermöglicht.

Nach einem weiteren Merkmal der Erfindung sind die
Halteorgane der Gerüste firstwärts einander paarweise zugeordnete Auflager für die weitere Ladefläche/n.
Zudem bestimmen jeweils zwei der Auflagestellenpaare ein Auflageraster, wobei in vorteilhafter Weise an der Ladefläche des Rolltrailers an dessen Stirnseiten Gerüste und dazwischen -- bevorzugt etwa in der Mitte der Längsachse des Rolltrailers -- wenigstens ein Mittelgerüst vorgesehen ist.

Außerdem hat es sich als günstig erwiesen, die Auflager von Tragtellern od. dgl. des Gerüstes mit davon aufragenden Rasten zu bilden, an die Gegenrasten eines Ladeaufsatzes anschließbar sind, der also dann vierpunktgelagert jeweils zwei der Gerüste der Ladefläche überspannt.

Jene Rasten sind bevorzugt als auf Tragtellern festliegende Vierkantstäbe ausgebildet, die in entsprechende Ausnehmungen des Ladeaufsatzes als Gegenraste einsetzbar sind.

Jener erfindungsgemäße Ladeaufsatz wird von einem Ladeboden als weiterer Ladefläche und seitlich vorgesehenen Gerüsten gebildet, welche erfindungsgemäß Ihrerseits wiederum Paare jener Auflagestellen oder Rasten für einen anderen Ladeaufsatz anbieten.

Dank dieser Maßgaben ist es nunmehr möglich, den im Schiffsraum befindlichen beladenen Rolltrailer je nach Schiffsraumhöhe mit einem oder gar mit zwei hier übereinander angeordneten Ladeaufsätzen zu versehen - dank der Rasterausführung sind diese Ladeaufsätze austauschbar. Sie nehmen zusätzliche Fracht im Schiffsstauraum auf, ohne daß diese Zulast die mit dem Rolltrailer in den Schiffsraum eingefahrenen Güter berühren würde.

Nach einem weiteren Merkmal der Erfindung hat es sich als vorteilhaft erwiesen, die Ladeaufsätze mit den Gerüsten des Rolltrailers im Bereich der Auflagestellen lösbar zu verbinden, um die nötige Stabilität während der Reise zu erzielen.

Um die Ladeaufsätze in gebrauchsfreiem Zustand besser
stapeln zu können, hat es sich als günstig erwiesen, die
Gerüste an den Ladeaufsätzen anzulenken und zum Ladeboden
hin klappbar zu gestalten.

Nach einem weiteren Merkmal der Erfindung werden die Gerüste nach dem Aufsetzen des Ladeaufsatzes auf die Gerüste
des Rollwagens hochgeklappt und in Gebrauchslage -- beispielsweise im Bereich von Schrägstützen -- eingerastet.

Im Rahmen der Erfindung liegt es auch, daß das Gerüst zumindest aus zwei an den Längsseiten der Ladefläche vorgesehenen Vertikalprofilen oder Kastenprofilen, einem diese
verbindenden Firstprofil sowie von den Vertikalprofilen
zur Längsseite geneigten Stützstäben besteht. Dabei hat
es sich bei den Gerüsten für den Rollwagen selbst als besonders günstig erwiesen, die Vertikalprofile mit Steckfüßen auszurüsten, die in Ausnehmungen der Ladefläche eingeführt werden können.

Als besonders stabil hat sich ein Gerüst erwiesen mit einem
Rahmen aus Vertikalprofil und Firstprofil und/oder einem
unterem Quergurt, wobei der Rahmen durch Hüllstäbe statisch
ausgesteift ist. Der Vorzug einer solchen Konstruktion
liegt darin, daß sie verhältnismäßig leicht und dennoch ausreichend stabil für die Zulast ist.

Die freien Enden der Vertikalprofile sind mit dem/den angrenzenden Stützstab/Stützstäben durch ein parallel zur
Ladefläche gerichtetes Sockelprofil verbunden oder am
Vertikalprofil angelenkt, so daß sie von dem Vertikalprofil in ihre Stützstellung abgeschwenkt werden können.

Zur einfachen lösbaren Verbindung des Gerüstes mit der Ladefläche wird der Steckfuß gegenüber dem Vertikalprofil oder
dem Stützstab drehbar und in einer Sperrlage festlegbar
vorgesehen, wobei sich als besonders günstig erwiesen hat,
den Steckfuß so zu gestalten, daß er in seiner Sperrlage
mit einem Anschlag einen Gegenanschlag an der Ladefläche
hintergreift; beide Anschläge bilden zusammen eine Verriegelung für den Steckfuß, also das Gerüst selbst und/oder
den Stützstab.

Der Steckfuß ist in einer besonders vorteilhaften Ausführungsform -- für ein Langloch der Ladefläche als Gegenorgan --
aus einem Hubstab mit seitlich abkragender Anschlagfläche
gebildet, der wenigstens einen in einem Schlitz geführten
Rastbolzen aufweist. Letzterer soll bei Drehung um die
Steckfußache in einen festliegenden Rastschlitz eingeführt
werden können.

Die vorstehend als Gerüst bezeichneten Gitterwände stellen
in der beschriebenen Form eine Verbesserung bestehender
Rolltrailer dar und können -- je nach Ausführungsform -- mit
den genannten Ladeaufsätzen mehrstöckig Lasten aufnehmen.

Auch ist es möglich, in dem beschriebenen Rastersystem als
Aufsatzetage Container zu verwenden, die durch die Gitterwände oder Gerüste erfindungsgemäß in Abstand zur Ladung
des Rolltrailers selbst gehalten sind.

Zur besseren Anpassung der Trailerladefläche kann diese
erfindungsgemäß selbst mit Vierkantstäben in beschriebenem Raster versehen sein; diese Vierkantstäbe sind
zur Festlegung der Gitterwände verwendbar, ersatzweise
aber an Container anschließbar.

Weitere Vorteile, Merkmale und Einzelheiten der Erfindung
ergeben sich aus der nachfolgenden Beschreibung bevorzugter Ausführungsbeispiele sowie anhand der Zeichnung;
diese zeigt in:

Fig.  1 eine Schrägsicht auf einen sog. Rolltrailer
mit von ihm aufragenden Traggerüsten;

Fig.  2 ein weiteres Ausführungsbeispiel des Rolltrailers
entsprechend der Darstellung in Fig. 1;

Fig.  3 ein vergrößertes Detail aus Fig. 2;

Fig.  4 eine Schrägsicht auf einen Teil der Fig. 3;

Fig.  5 einen Zusatzteil zu dem Rolltrailer nach Fig.1,2
in teilweise geschnittener Schrägsicht;

Fig.  6 ein weiteres Detail in Schrägsicht;

Fig. 7: eine Schrägsicht auf eine andere Ausführungsform von Rolltrailern.

Ein Rollwagen oder Rolltrailer  1 zur Aufnahme in der Zeichnung
übersichtlichkeitshalber vernachläßigter Ladegüter auf einer
-- über Rädern oder Rollen 2 in geringem Abstand h zum Fahrgrund 3 angeordneter -- Ladefläche 4 dient
zum Transport  dieser Ladegüter in den Stauraum eines nicht
dargestellten Schiffes, in dem der Rolltrailer  1 festgelegt und aus dem er am Bestimmungsort der Ladegüter mit
diesen herausgefahren wird. Jene Räder oder Rollen 2 sind
-- an einer Achse oder benachbarten zwei Achsen -- dem
Trailerheck $6_h$ zugeordnet; an der Front- oder Stirnseite 6
sind Kupplungsorgane 7 für eine nicht wiedergegebene Zugmaschine vorgesehen und nahe der Frontseite 6 Stützfüße $7_s$
zum zeitweiligen Abstellen des Rolltrailers 1.

P-109 /EPA

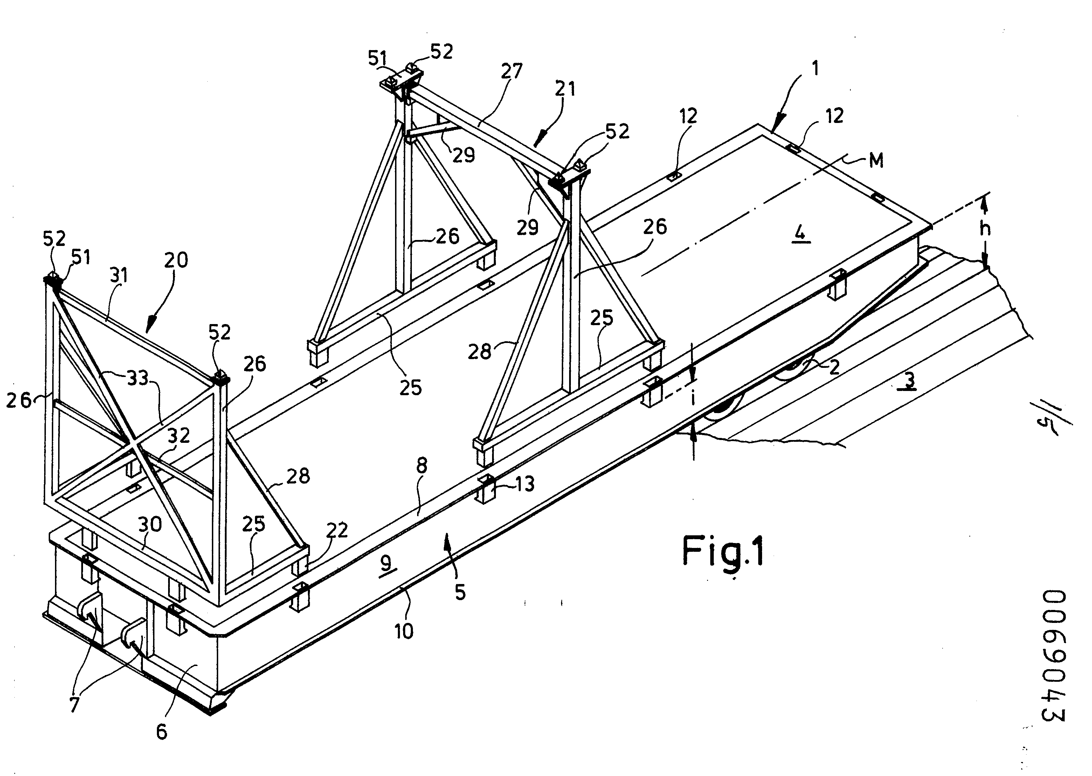

Die Ladefläche 4 umgibt ein von U- oder D-Profilen gebildeter Tragrahmen 5, der im Bereich seines obenliegenden Profilschenkels 8 mit in Draufsicht reckteckigen Ausnehmungen 12 zur Aufnahme nicht wiedergegebener Rungen oder Ladebordbegrenzer versehen ist; an jede dieser Ausnehmungen 12 schließt der Innenraum eines am Profilsteg 9 festliegenden Steckkastens 13 für die Rungenenden an. Gemäß Fig. 1 enden diese Steckkästen 13 in einem Abstand i zum unteren Profilschenkel 10.

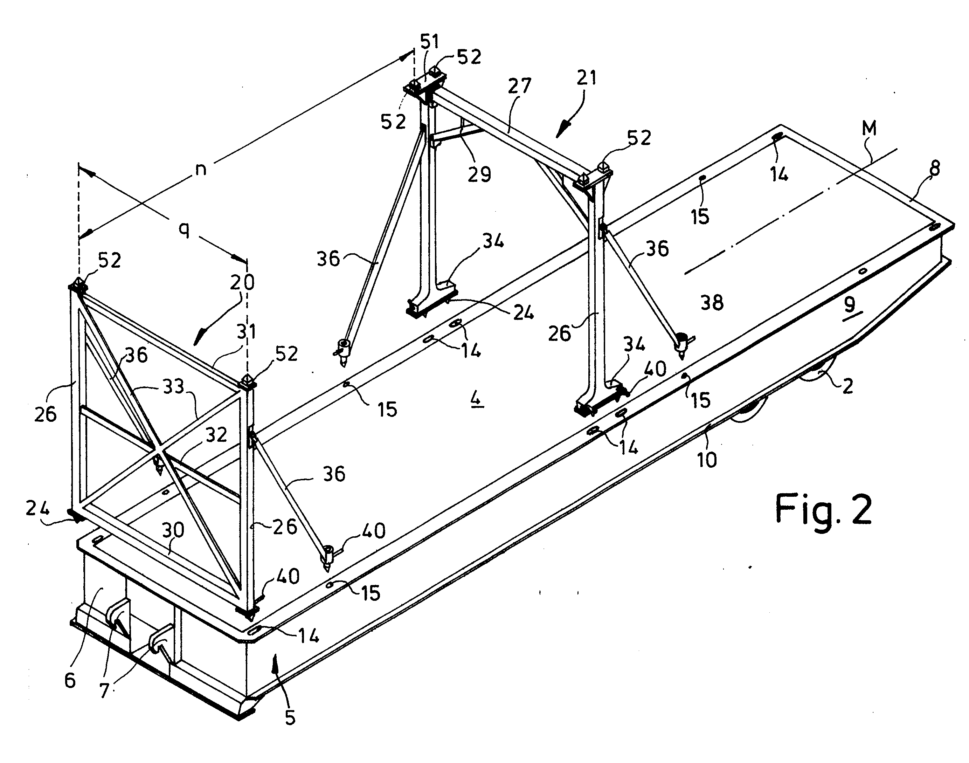

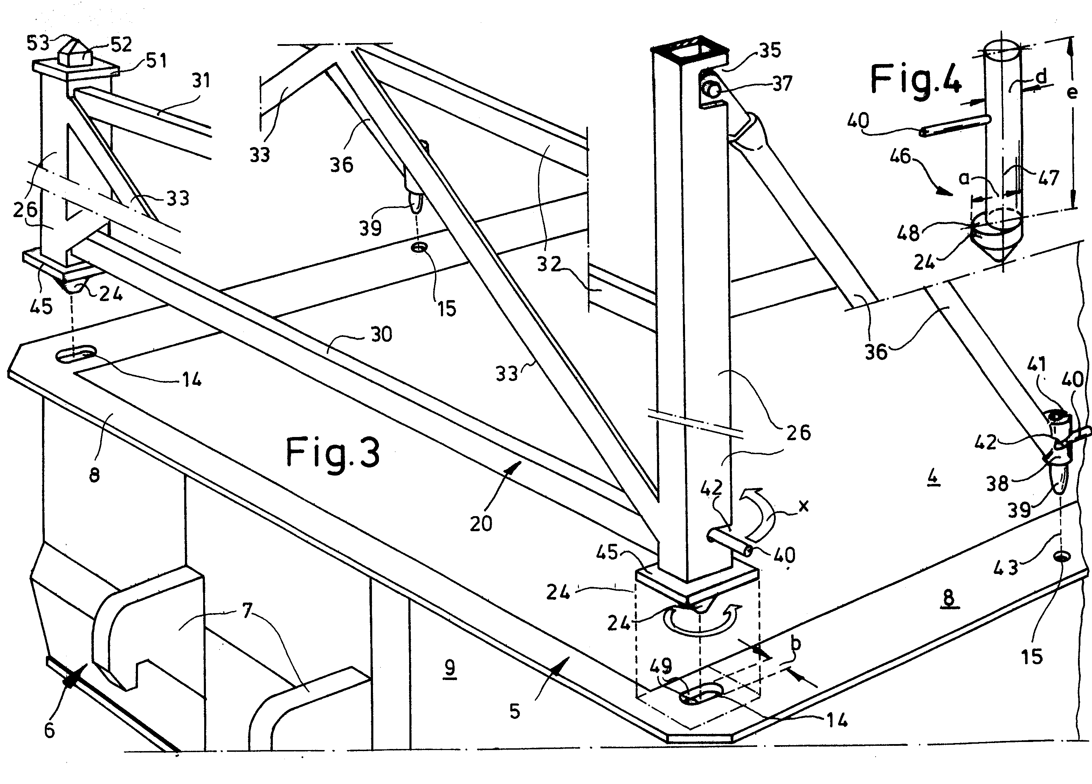

Beim Ausführungsbeispiel nach Fig. 2, 3 sind am Rolltrailer 11 statt der rechteckigen Ausnehmungen 12 im oberen Profilschenkel 8 Langlöcher 14 sowie Bohrungen 15 vorhanden.

In einige der Ausnehmungen 12 -- und damit in die anschließenden Steckkästen 13 -- des Rolltrailers 1 bzw. in die Langlöcher 14 des Rolltrailers 11 ragen quaderförmige bezw. rohrartige Steckfüße 22 bzw. 24 von an den Stirnseiten 6 festliegenden Frontgerüsten 20 und von einem mit 21 bezeichneten Mittelgerüst ein; die Front- bzw. Mittelgerüste 20, 21 sind in den Fig. 1 bis 3 in einer von der Ladefläche 4 abgehobenen Lage gezeigt, um deutlich werden zu lassen, daß es sich hierbei um auswechselbare Zusätze für den Rolltrailer 1, 11 handelt.

Das Mittelgerüst 21 weist zwei -- jeweils auf einem Sockelprofil 25 ruhende -- Vertikalprofile 26 sowie ein diese verbindendes und quer zur Mittelachse M des Rolltrailers 1, 11 verlaufendes Firstprofil 27 auf. Von den Enden jedes der zueinander parallelen Sockelprofile 25 verlaufen zum jeweiligen Vertikalprofil 26 geneigte Schrägstützen 28 als seitliche Versteifungsorgane.

Zudem sind zwischen Vertikalprofil 26 und Firstprofil 27
Eckverbinder 29 vorgesehen.

Das Frontgerüst 20 besteht aus zwei Vertikalprofilen 26,
einem diese verbindenden unteren Quergurt 30 und einem
oberen Quergurt 31, die einen durch einen Mittelstab 32 und
durch Diagonalstäbe 33 ausgesteiften Rahmen bilden. Von
diesem ragen parallel zur Längsachse M kurze Sockelprofile
25 ab, deren Enden durch Schrägstützen 28 mit dem jeweiligen
Vertikalprofil 26 verbunden sind.

Beim Ausführungsbeispiel des Rolltrailers  11 nach Fig. 2, 3
fehlen die beschriebenen Sockelprofile 25; hier ist an jeder
Vertikalstütze 26 in einer Einformung 35 ein Stützstab 36
mittels eines Gelenkzapfens 37 angelenkt. Der Stützstab 36
endet nach unten hin in einer in Einbaulage vertikalen Hülse
38, in der ein Steckzapfen 39 mittels eines davon radial
abragenden und in einem Vertikalschlitz 41 der Hülse 38
verschieblichen Rastbolzens 40 bewegbar lagert; letzterer
kann durch horizontales Schwenken um die Zapfenachse 43
in einen Querschlitz 42 geführt und dort verriegelt werden,
nachdem der Steckzapfen 39 in die für ihn  bestimmte Bohrung
15 eingesetzt worden ist.

Das als Kastenprofil gefertigte Vertikalprofil 26 endet nach
unten hin an einer Fußplatte 45, die von einem -- in soeben
am Beispiel des Steckzapfens 39 beschriebener Weise mittels
eines Rastbolzens 40 in einem Querschlitz 43 verriegelbaren
und in Pfeilrichtung x entriegelbaren -- Hubrohr 46 durchsetzt wird. Dieses weist an seinem unteren Ende den genannten konischen   Steckfuß 24 ovalen Grundrisses auf,
dessen Länge a größer  ist als die Breite b des zur Aufnahme
des Steckfusses 24 bestimmten Langloches 14.

Der Stützfuß 24 ist zur Längsachse 47 des Hubrohres 46
vom Durchmesser d exzentrisch angeordnet, so daß eine freie
Schulterfläche 48 entsteht, die in der in Fig. 3 dargestellten
Verriegelungsstellung des Steckfusses 24 die Langlochwandung
49 des Tragrahmens 5 seitlich untergreift.

Wie Fig. 2 verdeutlicht, ruht jedes der Kasten- oder Vertikalprofile 26 des Mittelgerüsts 21 auf einem sich parallel zur
Längsachse M des Rolltrailers 11 erstreckenden Fußprofil 34
mit zwei Steckfüßen 24 an Hubrohren, deren Höhe geringer
ist als die Höhe e des Hubrohres 46 der Fig. 4.

Nach oben hin endet dieses Kasten- oder Vertikalprofil 26 in
einer zum Sockel - oder Fußprofil 25 oder 34 parallelen Tragplatte 51, von der zwei Vierkantaufsätze 52 mit pyramidenartiger Spitze 53 aufragen. Die Tragplatten 51 auf den Frontgerüsten 20 sind mit jeweils einem Vierkantaufsatz 52 ausgerüstet. In Gebrauchslage des Rolltrailers 1, 11 beträgt
in den gewählten Ausführungsbeispielen der zur Mittelachse M
parallele Abstand n (Fig. 2) zwischen benachbarten Vierkantaufsätzen 52 etwa 5 m, der dazu querverlaufende Abstand q etwa
2 m.

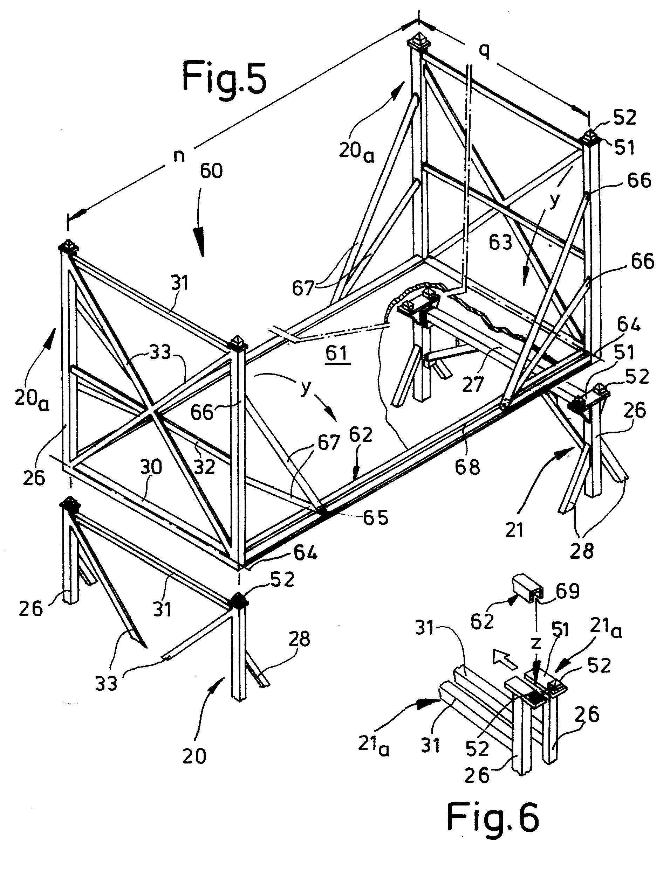

Die Abstände n, q zwischen benachbarten Vierkantaufsätzen 52
bilden ein Rastermaß für einen in Fig. 5 gezeigten Ladeaufsatz
60 mit einem Ladeboden 61 in einem Rahmen 62, an dessen beiden
Stirnseiten 63 Frontgerüste $20_a$ vorgesehen sind, die in ihrem
Aufbau den Frontgerüsten 20 beschriebener Art entsprechen.

Die breiten Frontgerüste $20_a$ sind entweder in der in Fig. 5 gezeigten Gebrauchsstellung fest montiert (hintenliegende Ecke der
Fig. 5) oder aber an Achsen 64 des Rahmens 62 angelenkt und so
in Pfeilrichtung y zum Ladeboden 61 hin klappbar.

Während dieses Klappvorganges gleiten die unteren Enden 65
von in 66 angelenkten Spriegeln 67 in einer Führungsschiene
68, in der sie in Gebrauchsstellung eingerastet sind.

Auf den Rolltrailer 1, 11 können jeweils zwei derartige
Ladeaufsätze 60 durch Absenken (Pfeil Z in Fig. 6) des
Rahmens 62 und Aufstecken im Bereich entsprechender Ausnehmungen 69 auf die Vierkantaufsätze 52 von Front- und
Mittelgerüst 20, 21 aufgesetzt werden. Dies erfolgt, wenn
der Rolltrailer 1, 11 mit seiner Last im Schiffsrumpf festgelegt ist und ausreichend Kopfraum zur Verfügung steht.

In Fig. 6 ist angedeutet, daß statt eines Mittelgerüsts
21 mit jeweils zwei Vierkantaufsätzen 52 auf jedem Vertikalprofil 26 nunmehr auch zwei in der Art der Frontgerüste 20
gestalteten Mittelgerüste 21a eingesetzt werden können.
In dieser Ausführung sind die Tragplatten 51 quer zur Längsachse M verschieblich festlegbar, um das Rastermaß q
gegebenenfalls geänderten Erfordernissen anpassen zu können.

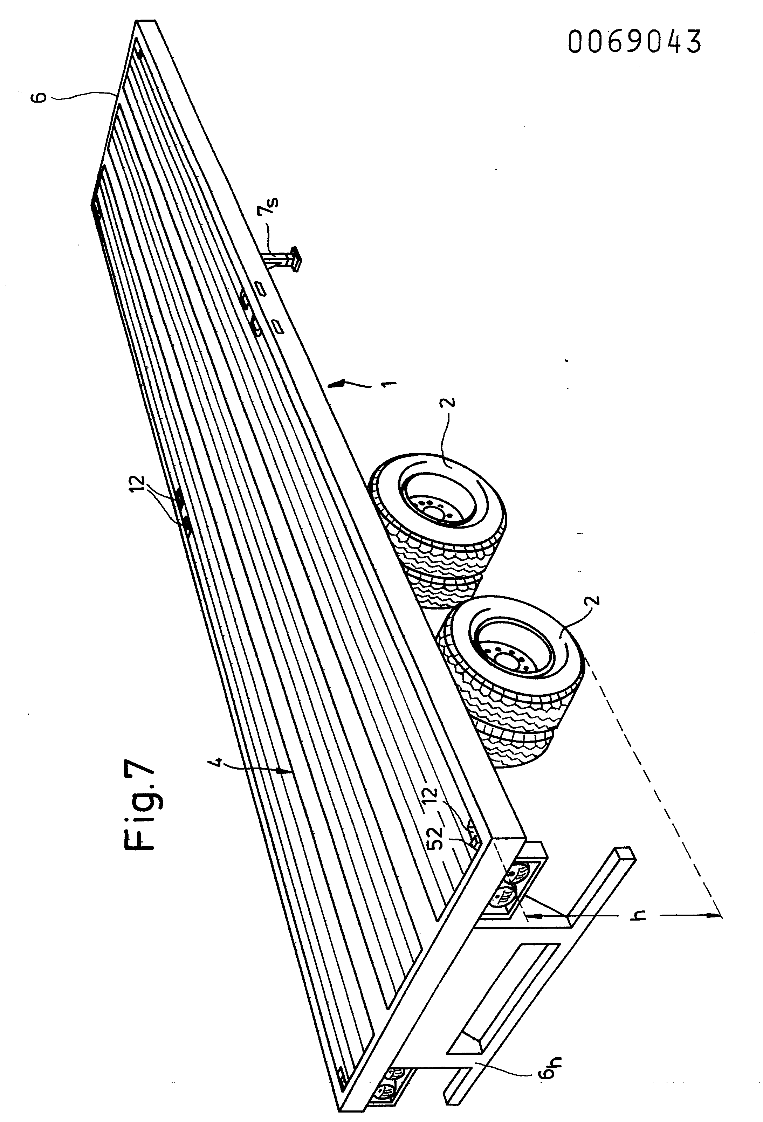

Beim Ausführungsbeispiel nach Fig. 7 sind Vierkantaufsätze
52 in den Ausnehmungen 12 der Ladefläche 4 zu erkennen,
dank deren die Gerüste 20, 21 festgelegt werden können; es
wird eine Anpassung der Ladefläche 4 an die geschilderte
Rasterform der Ladeaufsätze 60 erzielt.

P A T E N T A N S P R Ü C H E
=================================

1. Fahrzeug, insbesondere Rolltrailer für Schiffsladeräume mit einer Ladefläche auf Rollen oder Rädern
   und im Randbereich der Ladefläche vorgesehenen
   Halteorganen zum Festlegen von Halteeinrichtungen
   für Ladegüter, beispielsweise Rungentaschen zum Einstecken von Rungen,

   dadurch gekennzeichnet,

   daß von der Ladefläche (4) wenigstens zwei diese begrenzende rahmenartige Gerüste oder Gitterwände (20,
   21) aufragen, die an den Halteorganen (12,14,15) der
   Ladefläche festgelegt sind und in Abstand zu dieser
   eine Auflage mit Halteorganen (52) für eine weitere
   Ladefläche (61) bilden, die lösbar auf den Gerüsten
   oder Gitterwänden ruht.

2. Fahrzeug, insbesondere Rolltrailer, nach Anspruch 1,
   dadurch gekennzeichnet, daß die Halteorgane (52) der
   Gerüste (20,21,21$_a$) an deren oberen Enden einander
   paarweise zugeordnete Auflager sind und jeweils zwei
   der Auflagerpaare ein Auflageraster (n,q) bestimmen,
   wobei gegebenenfalls zwischen lösbar an den Stirnseiten (6,6$_k$) angebrachten Gerüsten (20) wenigstens
   ein lösbares Mittelgerüst (21,21$_a$) angeordnet ist.

3. Fahrzeug, insbesondere Rolltrailer, nach Anspruch 1
   oder 2, dadurch gekennzeichnet, daß die Auflager
   von Tragtellern od. dgl. (51) des Gerüsts (20,21,21$_a$)
   mit davon aufragenden Rasten (52) gebildet sind, an
   die Gegenrasten (69) eines Ladeaufsatzes (60) anschließbar sind, wobei gegebenenfalls die Tragteller
   bzw. die Rasten am Gerüst verstellbar vorgesehen sind
   und/oder Vierkantstäbe als Rasten dienen, die in
   Ausnehmungen (69) als Gegenrasten der weiteren Ladefläche (61) einsetzbar sind.

4. Fahrzeug, insbesondere Rolltrailer, nach Anspruch 1
   oder 3, dadurch gekennzeichnet, daß als weitere Ladefläche (61) der Ladeboden des Ladeaufsatzes (60) dient
   und der Ladeboden seitlich von Gerüsten (20$_a$) begrenzt
   ist, an denen gegebenenfalls Paare von Auflagestellen
   (51) oder Rasten (52) angeordnet sind.

5. Fahrzeug, insbesondere Rolltrailer nach wenigstens einem der Ansprüche 1 bis 4, dadurch gekennzeichnet,
   daß das Gerüst (20,21,21$_a$) zumindest aus zwei an den
   Längsseiten der Ladefläche (4,61) vorgesehenen
   Vertikalprofilen (26), einem diese verbindenden Firstprofil (27,31) sowie von den Vertikalprofilen zur
   Längsseite geneigten Stützstäben (28,36) besteht,
   wobei bevorzugt die Vertikalprofile und Stützstäbe
   durch bevorzugt verriegelbare Steckfüße (24,39,52)
   mit Ausnehmungen (12,14,15) der Ladefläche (4) verbunden sind.

6. Fahrzeug, insbesondere Rolltrailer, nach Anspruch 5,
   dadurch gekennzeichnet, daß die freien Enden von
   Vertikalprofil (26) und angrenzendem Stützstab (28)
   durch ein parallel zur Ladefläche (4) gerichtetes Sockelprofil (25) verbunden sind oder der Stützstab
(36) am Vertikalprofil (26) angelenkt ist.

7. Fahrzeug, insbesondere Rolltrailer, nach Anspruch 5,
   dadurch gekennzeichnet, daß die Steckfüße (52) in oder
   an den Ausnehmungen (12) angeordnet sind.

8. Fahrzeug, insbesondere Rolltrailer, nach Anspruch 5
   oder 7, dadurch gekennzeichnet, daß der verriegelbare
   Steckfuß (24,39) in seiner Sperrlage mit einem Anschlag
   (48) einen  Gegenanschlag (49) an der Ladefläche (4)
   hintergreift.

9. Fahrzeug, insbesondere Rolltrailer, nach Anspruch 5
   oder 8, dadurch gekennzeichnet, daß der Steckfuß (24,
   39) für ein Langloch (14) der Ladefläche (4) aus einem
   Hubstab (46) od. dgl. mit seitlich abkragender Anschlagfläche (48) besteht und wenigstens einen in einem Schlitz
   (41, 42) geführten Rastbolzen (40) aufweist.

10. Fahrzeug, insbesondere Rolltrailer, nach Anspruch 9,
    dadurch gekennzeichnet, daß der Rastbolzen (40) bei
    Drehung um die Steckfußachse (47) in einen festliegenden Rastschlitz (42) einführbar angeordnet ist.

0069043

**Fig.1**

Fig. 2

Fig.3

Fig.4

0069043

Fig.5

Fig.6

Fig.7

0069043

# EUROPÄISCHER RECHERCHENBERICHT

EP 82 71 0036.3

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | US - A - 3 802 357 (SHAHANI) <br> * ganzes Dokument * <br> -- | 1-4 | B 65 D 19/12 <br> B 62 D 33/02 |
| A | DE - A - 2 030 480 (RHEINSTAHL) <br> * Fig. 1 * <br> -- | 1 | |
| A | FR - A1 - 2 291 101 (DE CAVEL) <br> * Fig. * <br> -- | 1 | **RECHERCHIERTE SACHGEBIETE (Int. Cl.³)** |
| A | US - A - 3 735 713 (GLASSMEYER) <br> * Fig. 1, 2, 6 bis 8 * <br> -- | 5 | B 62 D 33/00 <br> B 65 D 19/00 |
| A | DE - U - 1 986 476 (STRICK CORP.) <br> * Fig. 1 bis 8 * <br> -- | 8 | |
| A | DE - B2 - 1 933 051 (CLARK) <br> * Fig. 1 bis 5 * <br> ---- | 8-10 | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 07-09-1982 | LUDWIG |

EPA form 1503.1   06.78